(19) Europäisches Patentamt / European Patent Office / Office européen des brevets

(11) **EP 2 003 834 B1**

(12) **FASCICULE DE BREVET EUROPEEN**

(45) Date de publication et mention
de la délivrance du brevet:
**27.04.2011   Bulletin 2011/17**

(51) Int Cl.:
***H04L 27/22*** *(2006.01)*

(21) Numéro de dépôt: **08158311.4**

(22) Date de dépôt: **16.06.2008**

(54) **Dispositif de démodulation d'un signal comportant des informations transitant par modulation de la phase d'une porteuse**

Vorrichtung zur Demodulation eines Signals, das Informationen umfasst, die durch Phasenmodulation einer Trägerwelle übermittelt werden

Device for demodulating a signal comprising information transmitted by modulating the phase of a carrier

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **15.06.2007   FR 0704285**

(43) Date de publication de la demande:
**17.12.2008   Bulletin 2008/51**

(73) Titulaire: **Commissariat à l'Énergie Atomique et aux Énergies Alternatives**
**75015 Paris (FR)**

(72) Inventeurs:
• **Masson, GILLES**
  **38000, GRENOBLE (FR)**
• **Reverdy, Jacques**
  **38290, CROLLES (FR)**

(74) Mandataire: **Lucas, Laurent Jacques**
**Marks & Clerk France**
**Conseils en Propriété Industrielle**
**Immeuble " Visium "**
**22, avenue Aristide Briand**
**94117 Arcueil Cedex (FR)**

(56) Documents cités:
**EP-A- 0 414 392      US-A- 5 140 278**
**US-A- 5 452 325      US-A- 5 990 733**

**Description**

L'invention concerne un dispositif de démodulation d'un signal comportant des informations transitant par modulation de la phase d'une porteuse. En particulier, l'invention s'applique aux systèmes de transmission de données non filaires comprenant un émetteur, un canal de transmission et un récepteur, dans lesquels l'information transite par modulation de la phase d'une porteuse ( modulation désignée plus communément par l'acronyme anglo-saxon « PSK » pour « Phase Shift Keying »).

Un dispositif de démodulation de la phase d'une porteuse est un dispositif généralement intégré dans un récepteur. Il permet notamment d'extraire l'information de modulation de la phase à partir de la porteuse du signal reçu. L'information de modulation de la phase est typiquement délivrée par un tel dispositif sous la forme d'un signal électrique dont la tension est proportionnelle au déphasage introduit par le dispositif émetteur ayant généré et émis le signal reçu.

Il existe dans l'état de la technique différents modes de réalisation de dispositif de démodulation de la phase d'une porteuse. Ces modes de réalisation peuvent notamment être divisés en trois catégories principales en fonction de la valeur du taux entre d'une part le débit binaire d'information véhiculé par le signal reçu et d'autre part la fréquence de la porteuse du signal reçu.

Lorsque ce taux est sensiblement inférieur à 1%, le dispositif de démodulation de la phase d'une porteuse est réalisé suivant une architecture comportant une ou plusieurs boucles à verrouillage de phase (ou selon l'expression anglo-saxonne Phased Locked Loop) ou un ou plusieurs détecteurs en quadrature. De tels dispositifs comprennent des filtres et des mélangeurs.

Lorsque ce taux est sensiblement compris entre 1% et 10%, le dispositif de démodulation de la phase d'une porteuse est réalisé suivant une architecture comportant une ou plusieurs boucles à verrouillage de phase ou une architecture qualifiée de directe à base de rampes. L'architecture directe à base de rampes est notamment détaillée dans la communication de D. Caucheteux, E. Beigné, M. Renaudin, E. Crochon, intitulée « A New Class of Asynchronous Inductive Contactless Devices Using Event Based Communications And Self-Timed Logic », IFIP International Conference on Very Large Scale Integration, VLSI-SoC'05, Perth Australia, 17-19 October, 2005.

Lorsque ce taux est sensiblement supérieur à 10%, le dispositif de démodulation de la phase d'une porteuse est réalisé suivant une architecture directe à base de rampes. Le champ d'application est alors restreint aux fréquences HF et VHF.

De nombreuses contraintes technologiques contraignent la conception de dispositifs de démodulation de la phase d'une porteuse, notamment lorsque ce taux est élevé, par exemple égal à 37.5% dans l'application RFID décrite ci-après. Ainsi, les technologies d'intégration sur silicium imposent de fonctionner sous des tensions d'alimentation faibles, typiquement 1,2V pour une technologie dont la finesse de gravure permet d'atteindre une longueur de grille d'un transistor MOS de 130nm. La dynamique en tension d'un tel dispositif peut être définie comme la différence entre d'une part la tension générée par le dispositif lorsque la phase du signal reçu atteint son maximum et d'autre part la tension générée par ledit dispositif lorsque la phase du signal reçu atteint son minimum. La dynamique en tension est liée notamment à la résolution en tension et au nombre de bits de codage de la phase. La résolution minimum acceptable est fixée par la marge de bruit minimum nécessaire à l'application, et dans une moindre mesure par les contraintes de conception du convertisseur analogique numérique. Or pour augmenter le débit binaire lorsque la durée du temps symbole est fonction de l'application et lorsque la résolution minimum est fixée par les contraintes de conception, le nombre de bit de codage de la phase doit être augmenté : la dynamique en tension augmente alors d'un rapport en puissance de 2. Pour un débit binaire important, c'est-à-dire de l'ordre de 5 Mbits/s, le rapport tension d'alimentation dudit dispositif sur dynamique en tension dudit dispositif (avant la conversion analogique/numérique) doit donc être proche de 1.

Le document US5990733A divulgue un démodulateur PSK comportant un système à base de rampes. Le démodulateur PSK délivre en sortie un signal dont la tension reste stable ou varie selon que les périodes de deux cycles consécutifs du signal sont identiques ou varient. L'amplitude de ces variations dépend entre autre du saut de phase programmé dans l'émetteur et de la bande passante du lien radiofréquence ou inductif (antennes émetteur et récepteur, canal). Cependant, comme cela est décrit plus en détail ci-après, ce démodulateur PSK exploite uniquement une fraction de l'amplitude de modulation et s'avère peu performant, voire inutilisable lorsque l'on souhaite un débit binaire important. Ceci est d'autant plus critique que les tensions d'alimentation du démodulateur sont faibles.

L'invention a notamment pour but de pallier les inconvénients précités. A cet effet, l'invention a pour objet un dispositif de démodulation d'un signal en entrée comportant des informations transitant par modulation de la phase d'une porteuse, ledit signal étant généré au moyen d'un émetteur commandant une variation de phase de ladite porteuse, pour chaque symbole comportant N cycles, N étant un entier strictement supérieur à 1, la variation de phase s'étalant du côté récepteur sur n cycles, n étant un entier supérieur à 1 et inférieur à N, le dispositif comportant :

- des moyens de génération d'une unique impulsion dite de mesure pour chaque symbole reçu, lesdits moyens étant adaptés à :

- • générer le premier front de l'impulsion de mesure correspondant au symbole considéré après une première durée constante à partir de l'instant de démarrage du symbole considéré, cette première durée étant inférieure à la durée minimale des n premiers cycles d'un symbole du signal en entrée ;
- • générer le second front de l'impulsion de mesure correspondant au symbole considéré après une seconde durée, pouvant être nulle, suivant le début du (n+1)-ième cycle du symbole considéré; et

- des moyens de conversion générant un signal en sortie dont la tension varie en fonction de la durée des impulsions produites.

Le dispositif comporte par exemple un générateur de rampes, un comparateur et un générateur d'horloges de commandes recevant le signal en entrée et générant des premier et second signaux d'horloge de commande composés d'impulsions de commande, une impulsion de commande étant associée à chaque symbole reçu, et dans lequel

- • une impulsion de commande du premier signal d'horloge de commande associée à un symbole donné présente :

  o un premier front se situant au cours d'un cycle d'horloge du symbole précédent, à un instant où le déphasage est redevenu stable sensiblement à zéro ;
  o un second front se situant après le premier front de l'impulsion de mesure correspondant au symbole donné;

- • une impulsion de commande du second signal d'horloge de commande associée à un symbole donné présente :

  o un premier front se situant après le premier front de l'impulsion de commande du premier signal d'horloge de commande associée au symbole donné, au cours d'un cycle d'horloge du symbole précédent, à un instant où le déphasage est redevenu stable sensiblement à zéro ou au plus tard au démarrage du symbole donné;
  o un second front se situant après le premier front de l'impulsion de mesure correspondant au symbole donné ;

le générateur de rampes délivrant :

- • une première rampe $V_1$ lors de chaque impulsion de commande du premier signal d'horloge de commande ;
- • une seconde rampe $V_2$ lors de chaque impulsion de commande du second signal d'horloge de commande, la seconde rampe ayant une pente supérieure à celle de la première rampe $V_1$ ;

le comparateur recevant la première rampe $V_1$ et la seconde rampe $V_2$ et générant en sortie un signal de comparaison à partir duquel le générateur d'horloge de commande génère pour chaque symbole l'unique impulsion de mesure.

Le générateur d'horloges de commande génère par exemple pour un symbole donné :

  o le premier front de l'unique impulsion de mesure à l'instant où la première rampe $V_1$ et la seconde rampe $V_2$ se croisent ;
  o le second front de l'unique impulsion de mesure après une durée prédéfinie, pouvant être nulle, suivant le début du (n+1)-ième cycle du symbole donné.

Dans un mode de réalisation particulier, le générateur de rampes comporte des condensateurs C1, C2 chargés à courant constant pour la génération des rampes $V_1$, $V_2$, les capacités desdits condensateurs à charger étant différentes.

Le comparateur délivre par exemple le signal de comparaison dont la tension au cours d'un symbole est :

  o égale à une première valeur tant que la première rampe $V_1$ est supérieure à la seconde rampe $V_2$ ;
  o égale à une seconde valeur dès que la seconde rampe $V_2$ devient supérieure à la première rampe $V_1$ ;
  o redevient égale à la première valeur sur commande d'un signal de remise à zéro.

Avantageusement, le front montant de l'unique impulsion de mesure d'un symbole i peut être produit au moyen d'un circuit de génération de retard, ce circuit de génération de retard détectant un front montant ou descendant d'un cycle du symbole précédent i - 1, à un instant où le déphasage est redevenu stable sensiblement à zéro.

Dans un autre exemple de réalisation, le front montant de l'unique impulsion de mesure d'un symbole i est produit au moyen d'un circuit de génération de retard, ce circuit de génération de retard détectant le front montant du premier cycle du symbole i et produit, après une durée prédéfinie à partir de cette détection, le front montant de l'impulsion de mesure du symbole i.

Le dispositif selon l'invention peut notamment être utilisé dans un système d'identification radio-fréquence à lien inductif comportant un module lecteur coopérant avec des étiquettes mobiles, une communication pouvant être établie entre le module lecteur et l'étiquette mobile par un lien inductif dont la porteuse est modulée en phase, le dispositif selon l'invention étant compris dans l'étiquette mobile pour effectuer la démodulation de la phase de la porteuse reçue.

D'autres caractéristiques et avantages de l'invention apparaîtront à l'aide de la description qui suit faite en regard des dessins annexés qui représentent :

- la figure 1, un schéma bloc d'un dispositif selon l'invention de démodulation d'un signal modulé ;
- la figure 2, un chronogramme des signaux reçus et générés par le dispositif selon l'invention ;
- la figure 3, un synoptique d'un mode de réalisation du générateur d'horloges de commande ;
- la figure 4, un synoptique d'un mode de réalisation du générateur de rampes ;
- la figure 5, un synoptique d'un mode de réalisation du comparateur de tension ;
- la figure 6, un synoptique d'un mode de réalisation du convertisseur temps-tension ;
- la figure 7, un synoptique d'un exemple d'utilisation du dispositif selon l'invention au sein d'un système d'identification radio-fréquence à lien inductif.

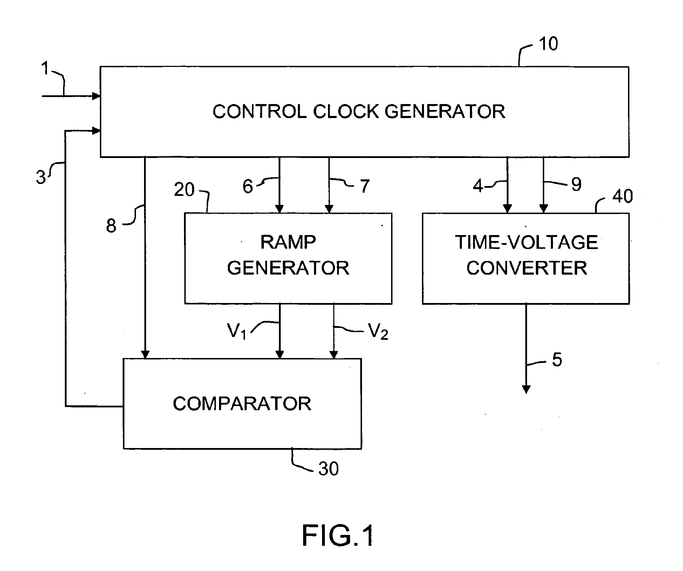

Un dispositif de démodulation selon la présente invention est placé dans un récepteur apte à recevoir un signal modulé fourni par un émetteur. Plus précisément, le signal modulé est généré au moyen d'un émetteur commandant une variation de phase tous les N cycles de la porteuse, N étant un entier supérieur à 1. Un symbole est équivalent à N cycles de la porteuse. La variation de phase est étalée du côté récepteur sur n cycles, n étant un entier strictement supérieur à 1 et strictement inférieur à N. Le dispositif selon l'invention reçoit un signal en entrée 1, voir la figure 1. Le signal en entrée 1 correspond au signal modulé émis par l'émetteur après traversée d'un canal de transmission. Le dispositif selon l'invention génère un signal de sortie 5 dont l'amplitude de la tension est fonction de la totalité du déphasage du signal en entrée 1.

Avantageusement, l'invention part du constat que pour un symbole donné, constitué de N cycles, le déphasage s'étale sur n cycles. Cet étalement a pour conséquence de rendre les systèmes de démodulation tels que décrits par exemple dans le document US5990733A précité peu efficace. En particulier, dans le cas du démodulateur décrit dans ce document US5990733A, les performances de la démodulation sont très réduites, car seule une fraction du déphasage programmé peut être mesurée. Par exemple, si on suppose que les sauts élémentaires sont équi-répartis sur 5 cycles du temps symbole, la variation du signal en sortie correspondra à une fraction du déphasage égale au saut élémentaire. La variation de tension sur la sortie démodulée ne représentera donc que 20% du déphasage total. Ainsi le démodulateur PSK décrit ne permet pas de récupérer la totalité de la variation de la phase de la porteuse. Dans le cadre des applications dans lesquelles le déphasage est étalé sur plusieurs cycles du temps symbole, le dispositif décrit ne permet pas de cumuler les sauts de phase élémentaires puisque seule une fraction du déphasage programmé est récupérée, la mesure étant effectuée cycle à cycle. En conséquence, le dispositif du document US5990733A est peu adapté à ce type d'applications.

En pratique, la porteuse du signal modulé a une période prédéfinie égale à TClkIN. Dans les exemples décrits ci-après, la porteuse est un signal en créneau, de type pseudo-horloge, présentant une période de référence hors modulation égale à une période nominale TClkIN. Chaque créneau correspond à un cycle de cette pseudo-horloge.

La figure 1 illustre par un schéma bloc un mode de réalisation d'un dispositif selon l'invention de démodulation d'un signal modulé. Le dispositif comporte notamment un générateur d'horloges de commande 10, un générateur de rampes 20, un convertisseur temps-tension 40 et un comparateur 30.

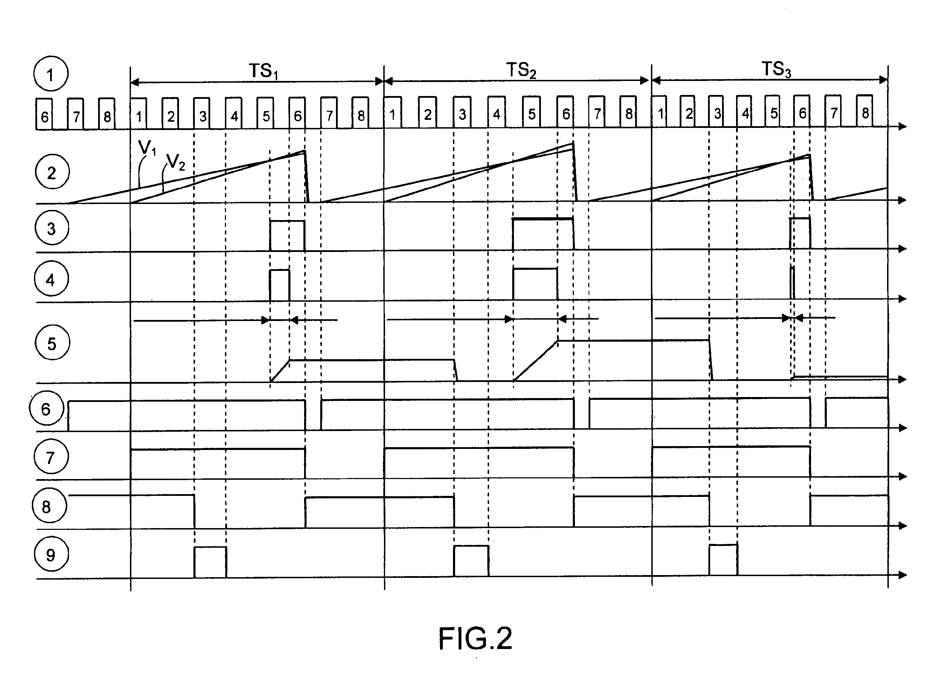

La figure 2 montre à l'aide d'un chronogramme les signaux reçus et généré par le dispositif représenté en figure 1. Les éléments identiques aux éléments déjà présentés sur les autres figures portent les mêmes références. Par la suite, le fonctionnement du dispositif selon l'invention est décrit à l'aide d'un exemple illustratif et non limitatif pour un signal en entrée 1, correspondant au signal modulé sur une porteuse de période TClkIN. Le signal en entrée 1 a un temps symbole (noté notamment, sur la figure 2, $TS_1$, $TS_2$ et $TS_3$) correspondant à 8 cycles. Le déphasage introduit par le récepteur est appliqué au début de chaque symbole du signal en entrée 1. L'étalement du déphasage s'étend sur 5 cycles d'horloge (cycles d'horloge 1 à 5). Les cycles d'horloge 6 à 8 ont une période nominale TClkIN, c'est-à-dire correspondant à un déphasage nul.

Le générateur d'horloges de commande 10 reçoit le signal en entrée 1. Le générateur d'horloges de commande 10 fournit des signaux de commande numériques en synchronisation sur le signal en entrée 1 correspondant au signal modulé. En particulier, il génère un premier signal d'horloge de commande 6 et un second signal d'horloge de commande 7 destiné à commander le générateur de rampes 20. Les premier et second signaux de commande 6, 7 sont composés d'impulsions de commande. Pour chaque signal de commande 6 et 7, une impulsion de commande est associée à chaque symbole reçu. La définition temporelle des signaux de commande 6 et 7 est décrite ci-dessous en relation avec les autres éléments et signaux du dispositif de démodulation.

Le premier signal d'horloge de commande 6 et le second signal d'horloge de commande 7 sont transmis au générateur de rampes 20. Le générateur de rampes 20 est un générateur de rampes à pentes contrôlées. Le générateur de rampe 20 génère une première rampe $V_1$ fonction du premier signal d'horloge de commande 6. Le front montant du signal d'horloge de commande 6 est synchrone de l'instant où début la montée de la rampe $V_1$. De même le front descendant du signal d'horloge de commande 6 est synchrone du front descendant du signal de rampe $V_1$. Le générateur de rampe 20 génère une seconde rampe $V_2$ fonction du second signal d'horloge de commande 7. Les règles de synchonisme entre le signal d'horloge de commade 7 et le signal de rampe $V_2$ sont les mêmes qu'entre le signal de d'horloge de commande 6 et le signal de rampe $V_1$.

Le générateur de rampe 20 génère la première rampe $V_1$ et la seconde rampe $V_2$ avec des pentes différentes. Les pentes des rampes $V_1$ et $V_2$ du générateur de rampe 20 sont configurées de manière à ce que les rampes $V_1$ et $V_2$ se croisent (sur l'exemple de la figure 2, au cours du cycle 5) avant la fin du n-ième cycle de chaque symbole quel que soit le déphasage possible.

Pour chaque symbole, l'instant où les rampes $V_1$ et $V_2$ se croisent est déterminé et constant par rapport au début du symbole. Autrement dit, la durée écoulée entre l'instant de démarrage d'un symbole et le croisement des rampes $V_1$, $V_2$ au cours de ce symbole est constante quelle que soit la durée du symbole.

Le comparateur 30 reçoit la première rampe $V_1$ et la seconde rampe $V_2$. Il génère en sortie un signal de comparaison 3. Ainsi, lors d'un symbole donné, tant que la première rampe $V_1$ est supérieure à la seconde rampe $V_2$ le signal de comparaison a une tension de valeur sensiblement nulle. Dès que la seconde rampe $V_2$ devient supérieur à la première rampe $V_1$, la tension du signal de comparaison 3 bascule à un niveau de tension VDD déterminée non nul positif, par exemple égal à la tension d'alimentation VDD du circuit. Le signal de comparaison 3 est ensuite réacheminé au générateur d'horloges de commande 10.

Le générateur d'horloges de commande 10 génère un signal 4 PulseDPhi de type impulsionnel comprenant une unique impulsion, dite de mesure, pendant la durée de chaque symbole. L'invention permet notamment d'optimiser la durée des impulsions du signal 4 PulseDPhi avant la conversion de la durée des impulsions en tension par le convertisseur temps-tension 40. Pour un symbole (numéroté i, i étant un entier) donné du signal en entrée 1, la position du front montant d'une impulsion du signal 4 PulseDPhi est sensiblement constante par rapport au début du temps symbole et correspond au front de montant de l'impulsion correspondante du signal de comparaison 3, c'est-à-dire à l'instant où la première rampe $V_1$ et la seconde rampe $V_2$ se croisent (sur l'exemple de la figure 2, au cours du cycle 5). Le front descendant de cette impulsion correspond à l'instant de mesure du déphasage total. L'instant de mesure du déphasage total est identique pour tous les symboles. Cet instant est choisi parmi les derniers cycles de chaque symbole présentant un déphasage sensiblement nul, c'est-à-dire les cycles suivant le n-ième cycle. Autrement dit, cet instant de mesure intervient après une durée prédéfinie, pouvant être nulle, suivant le début du (n+1)-ième cycle du symbole (soit sur l'exemple de la figure 2, le front montant du cycle 6 ).

Afin d'obtenir un signal 4 PulseDPhi tel que défini ci-dessus, les signaux d'horloge de commande 6, 7 délivrés par le générateur d'horloges doivent avoir les caractéristiques suivantes. Pour un symbole (numéroté i, i étant un entier) donné du signal en entrée 1, une impulsion de commande du premier signal d'horloge de commande 6 associée à un symbole donné (numéroté i) présente :

- un front montant qui se situe au cours d'un cycle du symbole précédent (numéroté i-1), à un instant où le déphasage est redevenu stable sensiblement à zéro, c'est à dire après le saut de phase appliqué sur les n premiers cycles du symbole précédent (i-1) ;
- un second front descendant qui se situe après le front montant de l'impulsion de mesure du signal 4 PulseDPhi correspondant au symbole donné.

Dans l'exemple de la figure 2, le premier signal d'horloge de commande 6 est composé pour chaque symbole i d'une impulsion de commande débutant au cycle 7 du symbole précédent (i-1) (sur le front montant du 7ème cycle du signal en entrée 1) et s'achevant au cycle 6 du symbole i (sur le front descendant du 6ème cycle du signal en entrée 1).

De même, pour un symbole i donné du signal en entrée 1, une impulsion de commande du second signal d'horloge de commande 7 associée à un symbole donné i présente :

- un front montant qui se situe après le premier front de l'impulsion de commande du premier signal d'horloge de commande 6 associée au symbole donné i, au cours d'un cycle d'horloge du symbole précédent (i-1), à un instant où le déphasage est redevenu stable sensiblement à zéro ou au plus tard au démarrage du symbole donné (c'est-à-dire sur le front montant du premier cycle du symbole i) ;
- un front descendant qui se situe après le front montant de l'impulsion de mesure du signal 4 PulseDPhi correspondant au symbole donné, par exemple au même instant que le front descendant de l'impulsion de commande correspondante du premier signal d'horloge de commande 6.

Dans l'exemple de la figure 2, le second signal d'horloge de commande 7 est composé pour chaque symbole i d'une impulsion débutant en synchronisation avec le front montant du premier cycle du symbole i et s'achevant en synchronisation avec le front descendant du cycle 6 du symbole i.

La durée de l'impulsion comprise dans le signal 4 PulseDPhi est ensuite convertie en une valeur de tension proportionnelle Vdem-i par un dispositif classique de conversion temps-tension à rampe, comme par exemple le convertisseur temps-tension 40, qui délivre un signal de sortie 5. Quand le signal de rampe $V_2$ devient supérieur au signal de rampe $V_1$, la rampe du signal de sortie est créée, cette rampe se terminant sur le front descendant du signal de mesure 4. Elle est suivie d'un plateau finissant sur le front descendant du signal d'horloge 8. Un système de conversion analogique-numérique numérise les valeurs de plateau au rythme d'un signal d'échantillonnage, non représenté, comprenant une impulsion d'échantillonnage arrivant au cours de chaque phase de plateau du signal 5.

Le générateur d'horloges de commande 10 peut aussi délivrer un signal de remise à zéro de la tension de sortie 9 comprenant des impulsions au convertisseur temps-tension afin de demander à celui-ci la remise à zéro de la tension de la rampe dans le signal de sortie 5. A titre d'exemple, ces impulsions sont générées au cours du cycle 3 pour chaque temps symbole. La mesure de la rampe par le convertisseur temps-tension 40 donne la valeur du déphasage pour un temps symbole donné.

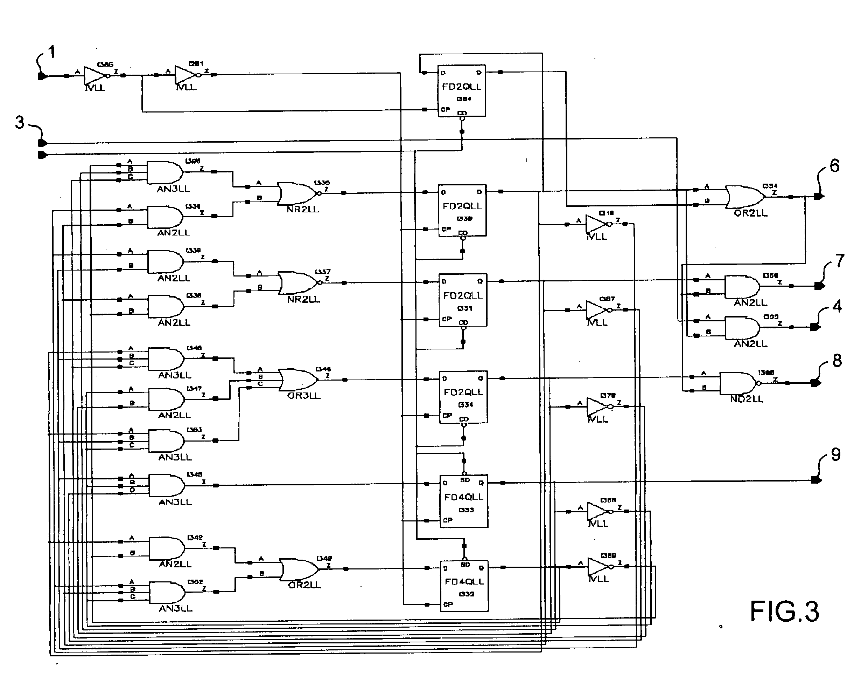

La figure 3 montre par un synoptique un mode de réalisation du générateur d'horloges de commande 10. Le mode de réalisation du générateur d'horloges de commande 10 est notamment adapté, à partir du signal 1 tel que représenté sur la figure 2, à la génération des signaux 6, 7, 4, 9 tel que représentés sur la figure 2. Des bascules à front assurent notamment la synchronisation des horloges de commande.

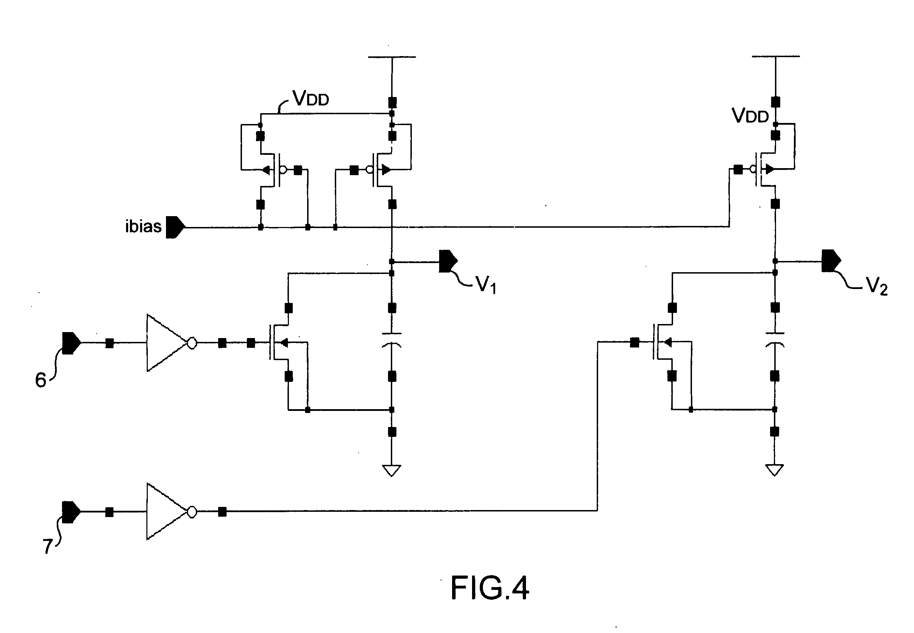

La figure 4 montre par un synoptique un mode de réalisation du générateur de rampes 20. Les rampes sont crées par la charge à courant constant d'un condensateur. Le courant de charge fixé par l'entrée ibias est le même pour la première rampe $V_1$ et pour la seconde rampe $V_2$. En revanche, les condensateurs à charger (de capacités C1 pour la première rampe $V_1$ et C2 pour la seconde rampe $V_2$ sur la figure ) sont différentes. Le démarrage et l'arrêt des rampes sont réalisés par des commutateurs ( par exemple des commutateurs désignés par l'expression anglo-saxonne « switchs Metal Oxide Semi-conductor ») commandés par le premier signal d'horloge de commande 6 et le second signal d'horloge de commande 7. Si le décalage temporel initial des deux rampes $V_1$ et $V_2$ est fixé à deux fois la période TCIKIN, l'expression mathématique suivante donne la position temporelle du point de croisement des rampes $V_1$ et $V_2$, noté Tfront-référence, par rapport au début du temps symbole :

$$Tfront\text{-}référence = 2*TClkIN / (C1/C2\text{-}1)$$

Ainsi, si la capacité C1 est égale à 1,5 pF et la capacité C2 à 1 pF, le rapport C1/C2 est alors égal à 1,5. la position temporelle du point de croisement des rampes $V_1$ et $V_2$ Tfront-référence est alors égale à quatre fois la période TCIKIN. La position Tfront-référence ne dépend au 1er ordre que du rapport de capacité, ce qui permet d'avoir une bonne précision sans ajustage de paramètre et ceci quel que soit les diverses sources de bruit, notamment celle liée aux variations de la tension d'alimentation VDD du dispositif.

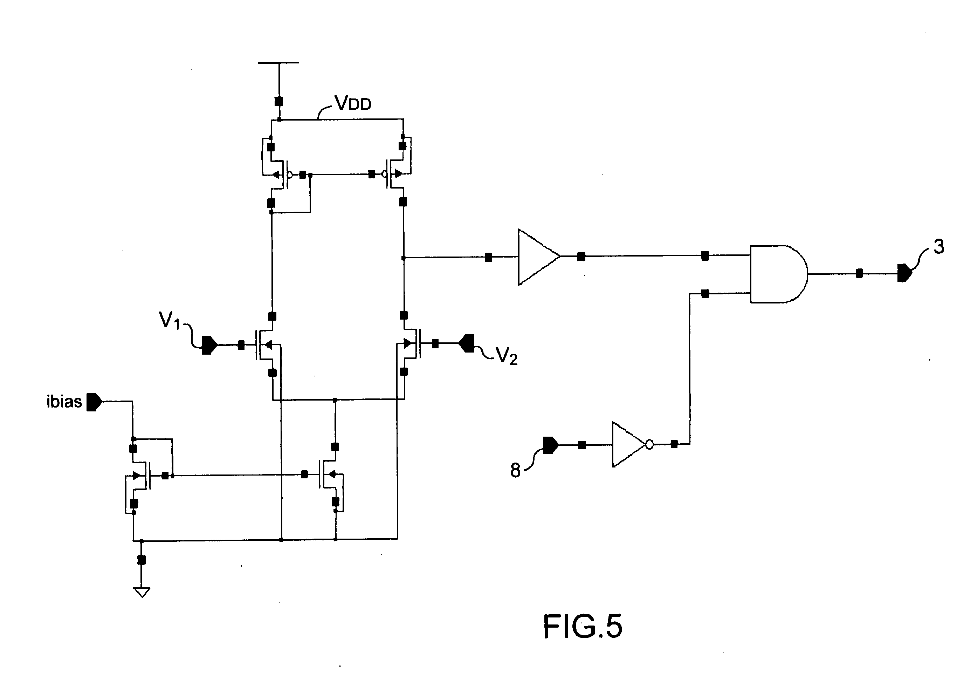

La figure 5 montre par un synoptique un mode de réalisation du comparateur 30 de tension. La rampe $V_1$ est envoyée sur l'entrée négative du dispositif et la rampe $V_2$ est envoyée sur l'entrée positive du dispositif. Tant que la rampe $V_1$ est supérieure à la rampe $V_2$, le signal de comparaison 3 délivré par le comparateur reste à 0V. Dès que la rampe $V_2$ devient supérieure à la rampe $V_1$, le comparateur 30 délivre une tension VDD strictement positive. Le courant de polarisation de l'étage différentiel est fixé par l'entrée ibias. Un signal 8 de remise à zéro du comparateur peut être généré par le générateur d'horloges de commande 10. Le signal 8 permet de bloquer la tension du signal de comparaison 3 à 0V, quelles que soient les tensions en entrées. Le signal 8 permet en conséquence de s'affranchir des problèmes de rebonds lors de la remise à 0 des rampes $V_1$ et $V_2$ lorsque les rampes $V_1$ et $V_2$ sont en dessous du seuil de fonctionnement du comparateur 30.

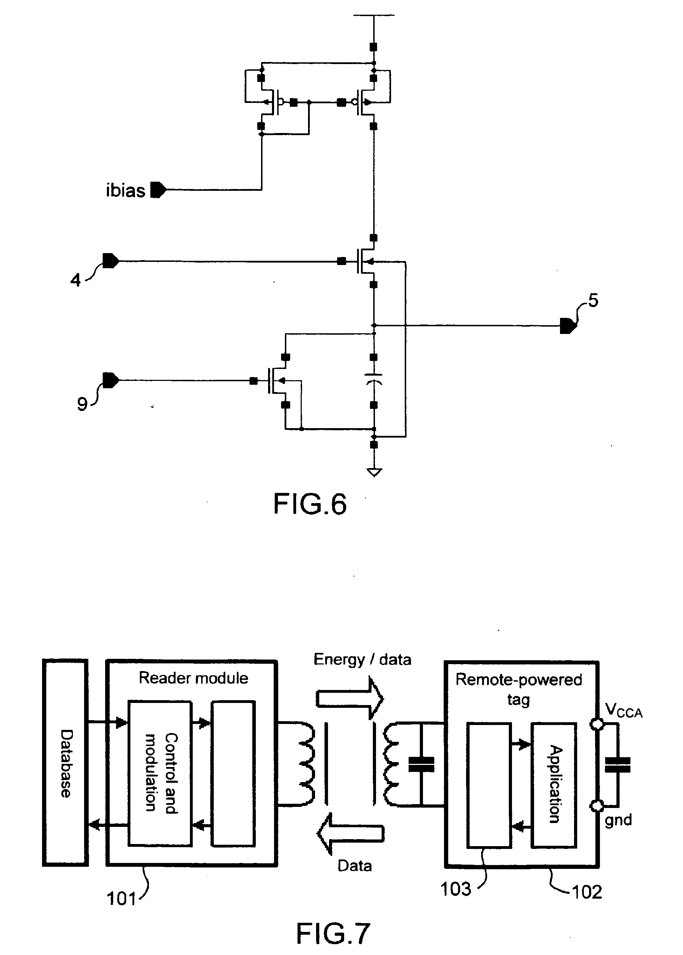

La figure 6 montre par un synoptique un mode de réalisation du convertisseur temps-tension 40. Il fournit le signal de sortie 5, dont les valeurs « plateaux » après chaque rampe sont proportionnelles aux durées des impulsions du signal 4 PulseDPhi. La conversion est effectuée classiquement par la charge à courant constant d'un condensateur. La charge démarre sur le front montant de l'impulsion et s'arrête sur le front descendant. La capacité est déchargée par le signal de remise à zéro de la tension de sortie 9. Le courant de charge est fixé par l'entrée ibias. Le démarrage et l'arrêt de la rampe sont réalisés par un commutateur ( par exemple un commutateur désigné par l'expression anglo-saxonne « switch Negative Metal Oxide Semi-conductor » ) commandé par le signal 4 PulseDPhi.

L'homme de l'art pourra en outre imaginer d'autres modes de réalisation d'un dispositif de démodulation selon la présente invention.

On pourra par exemple utiliser un dispositif de démodulation selon la présente invention comprenant un générateur d'une rampe unique de tension présentant les mêmes caractéristiques que la rampe de tension $V_1$ du dispositif décrit ci-dessus. Cette rampe unique de tension est fournie à un comparateur qui reçoit par un ailleurs un signal de référence. Ce signal de référence peut être une tension de référence. Dans ce cas, le comparateur commute quand la rampe de tension atteint cette tension de référence.

Selon un autre mode de réalisation d'un dispositif de démodulation selon la présente invention, le front montant de l'unique impulsion de mesure d'un symbole donné i est produit au moyen d'un circuit de génération de retard. Ce circuit de génération de retard détecte un front montant ou descendant d'un cycle du symbole précédent (i-1), à un instant où le déphasage est redevenu stable sensiblement à zéro ou détecte le front montant du premier cycle du symbole i et produit, après une durée prédéfinie à partir de cette détection, le front montant de l'impulsion de mesure du symbole i.

Entre autre, la polarité des signaux fournis par le générateur d'horloges de commande et le comparateur peut être inversée, les circuits commandés par les signaux de commande (générateur de rampes, convertisseur temps-tension) étant alors réalisés en logique complémentaire.

La figure 7 illustre par un synoptique un exemple d'utilisation du dispositif selon l'invention au sein d'un système d'identification radio-fréquence à lien inductif. Le dispositif selon l'invention peut être utilisé dans le cadre d'applications nécessitant un haut débit de transfert de données avec une fréquence de porteuse comprise dans les bandes HF et VHF. A titre d'exemple non limitatif, le dispositif selon l'invention peut être utilisé pour une application dans le domaine de l'identification radio-fréquence (ou selon l'acronyme anglo-saxon « RFID » pour « RadioFrequency Identification Device). Les caractéristiques principales typiques d'un signal utilisé pour une application d'identification radio-fréquence, dont la fréquence normalisée de la porteuse est fixée à 13,56 MHz, sont les suivants :

- Durée du temps symbole : 590 ns ;
- nombre de bits de codage de la phase : 3 bits ;
- débit binaire : 5,085 MBits/s.

Le système d'identification radio-fréquence à lien inductif représenté sur la figure 7 comporte un module lecteur 101 fixe coopérant avec des étiquettes mobiles 102. Lorsqu'une étiquette mobile 102 est situé dans le champ d'action du module lecteur 101, le module lecteur 101 transmet des données et de l'énergie via un champ magnétique à l'étiquette mobile 102. En réponse, l'étiquette mobile 102 émet des données vers le module lecteur 101. Une communication entre le module lecteur 101 et l'étiquette mobile est établie par un lien inductif dont la porteuse est modulée en phase. La porteuse modulée est reçue via une antenne accordée de l'étiquette mobile 102 (accord en inductance et en capacité) pour être mise en forme si nécessaire. Le dispositif selon l'invention peut par exemple être intégré dans une partie frontale 103 (ou selon l'expression anglo-saxonne « front-end » ) afin d'effectuer la démodulation de la phase de la porteuse ainsi reçue.

La compacité du dispositif selon l'invention autorise sa mise en oeuvre à l'aide de technologies silicium à faible tension d'alimentation, et à faible consommation. Le dispositif selon l'invention peut donc être intégré aisément dans une étiquette télé alimentée. La faible consommation du dispositif selon l'invention ainsi que sa compacité et sa faible tension d'alimentation permettent d'optimiser la surface de silicium du circuit de l'étiquette et de réduire directement le coût du produit et la consommation sur la distance maximum de transmission. Le dispositif selon l'invention permet d'atteindre des débits de communication élevés répondant aux exigences dans les domaines de l'identification des personnes et du multimédia.

**Revendications**

**1.** Dispositif de démodulation d'un signal en entrée (1) comportant des informations transitant par modulation de la phase d'une porteuse, ledit signal (1) étant généré au moyen d'un émetteur commandant une variation de phase de ladite porteuse, pour chaque symbole comportant N cycles, N étant un entier strictement supérieur à 1, ledit dispositif comportant :

- des moyens (10, 20, 30) de génération d'une unique impulsion de mesure pour chaque symbole reçu, lesdits moyens (10, 20, 30) étant adaptés à :

   • générer le premier front de l'impulsion de mesure correspondant au symbole considéré après une première durée constante à partir de l'instant de démarrage du symbole considéré;
   • générer le second front de l'impulsion de mesure correspondant au symbole considéré après une seconde durée, et

   - des moyens de conversion (40) générant un signal en sortie (5) dont la tension varie en fonction de la durée des impulsions produites,

   le dispositif de démodulation (1) étant **caractérisé en ce que** la variation de phase s'étalant du côté récepteur sur n cycles, n étant un entier strictement supérieur à 1 et inférieur à N, ladite première durée est inférieure à la durée minimale des n premiers cycles d'un symbole du signal en entrée, ladite seconde durée suit le début du (n+1)-ième cycle du symbole considéré.

2.  Dispositif selon la revendication 1 **caractérisé en ce qu'**il comporte un générateur de rampes (20), un comparateur (30) et un générateur d'horloges de commandes (10) recevant le signal en entrée (1) et générant des premier et second signaux d'horloge de commande (6, 7) composés d'impulsions de commande, une impulsion de commande étant associée à chaque symbole reçu, et dans lequel

    • une impulsion de commande du premier signal d'horloge de commande (6) associée à un symbole donné présente :

      o un premier front se situant au cours d'un cycle d'horloge du symbole précédent, à un instant suivant les n premiers cycles du symbole précédent;
      o un second front se situant après le premier front de l'impulsion de mesure correspondant au symbole donné;

    • une impulsion de commande du second signal d'horloge de commande (7) associée à un symbole donné présente :

      o un premier front se situant après le premier front de l'impulsion de commande du premier signal d'horloge de commande (6) associée au symbole donné, au cours d'un cycle d'horloge du symbole précédent, à un instant suivant les n premiers cycles du symbole précédent ou au plus tard au démarrage du symbole donné;
      o un second front se situant après le premier front de l'impulsion de mesure correspondant au symbole donné ;

    le générateur de rampes (20) délivrant :

    • une première rampe ($V_1$) lors de chaque impulsion de commande du premier signal d'horloge de commande (6) ;
    • une seconde rampe ($V_2$) lors de chaque impulsion de commande du second signal d'horloge de commande (7), la seconde rampe ayant une pente supérieure à celle de la première rampe ($V_1$) ;

    le comparateur (30) recevant la première rampe ($V_1$) et la seconde rampe ($V_2$) et générant en sortie un signal de comparaison (3) à partir duquel le générateur d'horloge de commande (10) génère pour chaque symbole l'unique impulsion de mesure.

3.  Dispositif selon la revendication 2 **caractérisé en ce que** le générateur d'horloges de commande (10) génère pour un symbole donné :

      o le premier front de l'unique impulsion de mesure à l'instant où la première rampe ($V_1$) et la seconde rampe ($V_2$) se croisent ;
      o le second front de l'unique impulsion de mesure après une durée prédéfinie, pouvant être nulle, suivant le début du (n+1)-ième cycle du symbole donné.

4.  Dispositif selon l'une quelconque des revendications 2 à 3 **caractérisé en ce que** le générateur de rampes (20) comporte des condensateurs (C1, C2) chargés à courant constant pour la génération des rampes ($V_1$, $V_2$), les capacités desdits condensateurs à charger étant différentes.

5.  Dispositif selon l'une quelconque des revendications 2 à 4 **caractérisé en ce que** le comparateur (30) délivre le signal de comparaison (3) dont la tension au cours d'un symbole est :

      o égale à une première valeur tant que la première rampe ($V_1$) est supérieure à la seconde rampe ($V_2$) ;
      o égale à une seconde valeur dès que la seconde rampe ($V_2$) devient supérieure à la première rampe ($V_1$) ;
      o redevient égale à la première valeur sur commande d'un signal de remise à zéro.

6.  Dispositif selon l'une quelconque des revendications 2 à 5, **caractérisé en ce que** la rampe de tension ($V_1$) est fournie à un comparateur qui reçoit par ailleurs une tension de référence, le comparateur commutant quand la

rampe de tension ($V_1$) atteint cette tension de référence.

**7.** Dispositif selon l'une quelconque des revendications précédentes, **caractérisé en ce que** le front montant de l'unique impulsion de mesure d'un symbole i est produit au moyen d'un circuit de génération de retard, ce circuit de génération de retard détectant un front montant ou descendant d'un cycle du symbole précédent i - 1, à un instant où le déphasage est redevenu stable sensiblement à zéro.

**8.** Dispositif selon l'une quelconque des revendications 1 à 6, **caractérisé en ce que** le front montant de l'unique impulsion de mesure d'un symbole i est produit au moyen d'un circuit de génération de retard, ce circuit de génération de retard détectant le front montant du premier cycle du symbole i et produit, après une durée prédéfinie à partir de cette détection, le front montant de l'impulsion de mesure du symbole i.

**9.** Utilisation du dispositif selon l'une quelconque des revendications précédentes dans un système d'identification radio-fréquence à lien inductif comportant un module lecteur (101) coopérant avec des étiquettes mobiles (102), une communication pouvant être établie entre le module lecteur (101) et l'étiquette mobile (102) par un lien inductif dont la porteuse est modulée en phase, le dispositif selon l'invention étant compris dans l'étiquette mobile (102) pour effectuer la démodulation de la phase de la porteuse reçue.

**Claims**

**1.** A device for demodulating an input signal (1) comprising information conveyed by phase modulation of a carrier, said signal (1) being generated by means of an emitter effecting a phase variation of said carrier, for each symbol comprising N cycles, N being an integer strictly greater than 1, said device comprising:

- means (10, 20, 30) for generating a single measuring pulse for each received symbol, said means (10, 20, 30) being designed to:

• generate the first edge of the measuring pulse corresponding to the symbol considered following a first constant duration from the point of starting of the considered symbol;
• generate the second edge of the measuring pulse corresponding to the symbol considered following a second duration, and

- conversion means (40) generating an output signal (5), the voltage of which varies as a function of the duration of the pulses produced,

the demodulating device (1) being **characterised in that** as the phase variation spreads on the receiver side over n cycles, n being an integer strictly greater than 1 and less than N, said first duration is less than the minimum duration of n first cycles of a symbol of the input signal, said second duration follows the beginning of the (n+1)th cycle of the considered symbol.

**2.** The device according to claim 1, **characterised in that** it comprises a ramp generator (20), a comparator (30) and a control clock generator (10) receiving the input signal (1) and generating first and second control clock signals (6, 7) composed of control pulses, each received signal being associated with one control pulse, and wherein

• a control pulse of the first control clock signal (6) associated with a given symbol has:

○ a first edge located during a clock cycle of the preceding symbol at an instant following the n first cycles of the preceding symbol;
○ a second edge located after the first edge of the measuring pulse corresponding to the given symbol;

• a control pulse of the second control clock signal (7) associated with a given symbol has:

○ a first edge located after the first edge of the control pulse of the first control clock signal (6) associated with the given symbol, during a clock cycle of the preceding symbol, at an instant following the n first cycles of the preceding symbol or at the start of the given symbol at the latest;
○ a second edge located after the first edge of the measuring pulse corresponding to the given symbol;

the ramp generator (20) providing:

- a first ramp ($V_1$) during each control pulse of the first control clock signal (6);
- a second ramp ($V_2$) during each control pulse of the second control clock signal (7), the second ramp having a pitch greater than that of the first ramp ($V_1$);

the comparator (30) receiving the first ramp ($V_1$) and the second ramp ($V_2$) and generating a comparison output signal (3) from which the control clock timer (10) generates the unique measuring pulse for each symbol.

3. The device according to claim 2, **characterised in that** the control clock generator (10) generates for a given symbol:

○ the first edge of the unique measuring pulse at the instant of the crossover of the first ramp ($V_1$) and the second ramp ($V_2$);
○ the second edge of the unique measuring pulse after a predetermined duration, which may be zero, following the start of (n+1)th cycle of the given symbol.

4. The device according to any one of claims 2 to 3, **characterised in that** the ramp generator (20) comprises capacitors (C1, C2) charged with a constant current to generate the ramps ($V_1$, $V_2$), the capacities of said capacitors to be charged differing from each other.

5. The device according to any one of claims 2 to 4, **characterised in that** the comparator (30) provides the comparison signal (3), the voltage of which during a symbol:

○ is equal to a first value, as long as the first ramp ($V_1$) is greater than the second ramp ($V_2$);
○ is equal to a second value, as soon as the second ramp ($V_2$) becomes greater than the first ramp ($V_1$);
○ becomes equal again with the first value following a command from a reset signal.

6. The device according to any one of claims 2 to 5, **characterised in that** the voltage ramp ($V_1$) is provided to a comparator which also receives a reference voltage, the comparator commutating when the voltage ramp ($V_1$) reaches this reference voltage.

7. The device according to any one of the preceding claims, **characterised in that** the rising edge of the unique measuring pulse of a symbol i is produced by means of a delay generation circuit, said delay generation circuit detecting a rising or falling edge of a cycle of the preceding symbol i-1, at an instant when the phase shift has re-stabilised at essentially zero.

8. The device according to any one of claims 1 to 6, **characterised in that** the rising edge of the unique measuring pulse of a symbol i is produced by means of a delay generation circuit, said delay generation circuit detecting the rising edge of the first cycle of the symbol i and producing, after a predefined duration from this detection, the rising edge of the measuring pulse of the symbol i.

9. The use of the device according to any one of the preceding claims in a radio-frequency identification system with an inductive link comprising a reader module (101) cooperating with mobile tags (102), with it being possible to establish communication between the reader module (101) and the mobile tag (102) by an inductive link in which the carrier is phase modulated, the device according to the invention being included in the mobile tag (102) to perform the demodulation of the phase of the received carrier.

**Patentansprüche**

1. Vorrichtung zum Demodulieren eines Eingangssignals (1), das durch Modulieren der Phase eines Trägers übertragene Informationen enthält, wobei das Signal (1) von einem Emitter erzeugt wird, der eine Phasenvariation des Trägers bewirkt, die für jedes Symbol N Zyklen umfasst, wobi N eine ganze Zahl unbedingt größer als 1 ist, wobei die Vorrichtung Folgendes umfasst:

- Mittel (10, 20, 30) zum Erzeugen eines einzelnen Messimpulses für jedes empfangene Symbol, wobei die Mittel (10, 20, 30) zu Folgendem ausgelegt sind:

• Erzeugen der ersten Flanke des Messimpulses, das dem betrachteten Symbol entspricht, nach einer ersten konstanten Dauer ab des Startpunkts des betrachteten Symbols;
• Erzeugen der zweiten Flanke des Messimpulses, das dem betrachteten Symbol entspricht, nach einer zweiten Dauer, und

- Wandlungsmittel (40) zum Erzeugen eines Ausgangssignals (5), dessen Spannung je nach der Dauer der erzeugten Impulse variiert,
wobei die Demodulationsvorrichtung (1) **dadurch gekennzeichnet ist, dass** die Phasenvariation auf der Empfängerseite über n Zyklen verteilt ist, wobei n eine ganze Zahl unbedingt größer als 1 und kleiner als N ist, wobei die erste Dauer kleiner als die Mindestdauer von n ersten Zyklen eines Symbols des Eingangssignals ist, wobei die zweite Dauer auf den Anfang des (n+1)ten Zyklus des betrachteten Symbols folgt.

2. Vorrichtung nach Anspruch 1, **dadurch gekennzeichnet, dass** sie einen Rampengenerator (20), einen Komparator (30) und einen Steuertaktgenerator (10) umfasst, der das Eingangssignal (1) empfängt und ein erstes und ein zweites Steuertaktsignal (6, 7) erzeugt, die sich aus Steuerimpulsen zusammensetzen, wobei jedem empfangenen Signal ein Steuerimpuls zugeordnet ist und wobei

• ein Steuerimpuls des einem gegebenen Symbol zugeordneten ersten Steuertaktsignals (6) Folgendes aufweist:

○ eine erste Flanke, die sich im Laufe eines Taktzyklus des vorhergehenden Symbols an einem Punkt gemäß den n ersten Zyklen des vorhergehenden Symbols befindet;
○ eine zweite Flanke, die sich hinter der ersten Flanke des Messimpulses befindet, der dem gegebenen Symbol entspricht;

• ein Steuerimpuls des einem gegebenen Symbol zugeordneten zweiten Steuertaktsignals (7) Folgendes aufweist:

○ eine erste Flanke, die sich im Laufe eines Taktzyklus des vorhergehenden Symbols zu einem Zeitpunkt nach den n ersten Zyklen des vorhergehenden Symbols oder spätestens zu Beginn des gegebenen Symbols hinter der ersten Flanke des Steuerimpulses des mit dem gegebenen Symbol zugeordneten ersten Steuertaktsignals (6) befindet;
○ eine zweite Flanke, die sich hinter der ersten Flanke des Messimpulses befindet, der dem gegebenen Symbol entspricht;

wobei der Rampengenerator (20) Folgendes bereitstellt:

• eine erste Rampe ($V_1$) bei jedem Steuerimpuls des ersten Steuertaktsignals (6);
• eine zweite Rampe ($V_2$) bei jedem Steuerimpuls des zweiten Steuertaktsignals (7), wobei die zweite Rampe eine Steigung hat, die größer ist als die der ersten Rampe ($V_1$) ;

wobei der Komparator (30) die erste Rampe ($V_1$) und die zweite Rampe ($V_2$) empfängt und am Ausgang ein Vergleichssignal (3) erzeugt, von dem der Steuertakt-Timer (10) den eindeutigen Messimpuls für jedes Symbol erzeugt.

3. Vorrichtung nach Anspruch 2, **dadurch gekennzeichnet, dass** der Steuertaktgenerator (10) für ein gegebenes Symbol Folgendes erzeugt:

○ die erste Flanke des eindeutigen Messimpulses zum Zeitpunkt des Überkreuzens der ersten Rampe ($V_1$) und der zweiten Rampe ($V_2$);
○ die zweite Flanke des eindeutigen Messimpulses nach einer vorbestimmten Dauer, die null sein kann, nach dem Beginn des (n+1)ten Zyklus des gegebenen Symbols.

4. Vorrichtung nach einem der Ansprüche 2 bis 3, **dadurch gekennzeichnet, dass** der Rampengenerator (20) Kondensatoren (C1, C2) umfasst, die mit konstantem Strom geladen werden, um die Rampen ($V_1$ $V_2$) zu erzeugen, wobei die Kapazitäten der zu ladenden Kondensatoren unterschiedlich sind.

5. Vorrichtung nach einem der Ansprüche 2 bis 4, **dadurch gekennzeichnet, dass** der Komparator (30) das Vergleichssignal (3) bereitstellt, dessen Spannung während eines Symbols:

○ gleich einem ersten Wert ist, solange die erste Rampe ($V_1$) größer ist als die zweite Rampe ($V_2$);
○ gleich einem zweiten Wert ist, sobald die zweite Rampe ($V_2$) größer wird als die erste Rampe ($V_1$);
○ nach einem Befehl von einem Reset-Signal wieder gleich dem ersten Wert wird.

6. Vorrichtung nach einem der Ansprüche 2 bis 5, **dadurch gekennzeichnet, dass** die Spannungsrampe ($V_1$) an einen Komparator angelegt wird, der ferner eine Referenzspannung empfängt, wobei der Komparator kommutiert, wenn die Spannungsrampe ($V_1$) diese Referenzspannung erreicht.

7. Vorrichtung nach einem der vorherigen Ansprüche, **dadurch gekennzeichnet, dass** die ansteigende Flanke des eindeutigen Messimpulses eines Symbols i von einer Verzögerungserzeugungsschaltung erzeugt wird, wobei diese Verzögerungserzeugungsschaltung eine ansteigende oder abfallende Flanke eines Zyklus des vorangehenden Symbols i-1 zu einem Zeitpunkt erkennt, an dem sich die Phasenverschiebung im Wesentlichen auf Null stabilisiert hat.

8. Vorrichtung nach einem der Ansprüche 1 to 6, **dadurch gekennzeichnet, dass** die ansteigende Flanke des eindeutigen Messimpulses eines Symbols i von einer Verzögerungserzeugungsschaltung erzeugt wird, wobei diese Verzögerungserzeugungsschaltung die ansteigende Flanke des ersten Zyklus des Symbols i erkennt und nach einer vordefinierten Dauer nach dieser Erkennung die ansteigende Flanke des Messimpulses des Symbols i erzeugt.

9. Verwendung der Vorrichtung nach einem der vorherigen Ansprüche in einem Radiofrequenzidentifikationssystem mit einem induktiven Verbindungsglied, das ein Lesemodul (101) umfasst, das mit mobilen Etiketten (102) zusammenwirkt, wobei Kommunikationen zwischen dem Lesemodul (101) und dem mobilen Etikett (102) durch ein induktives Verbindungsglied aufgebaut werden können, dessen Träger phasenmoduliert ist, wobei die erfindungsgemäße Vorrichtung in dem mobilen Etikett (102) enthalten ist, um die Demodulation der Phase des empfangenen Trägers zu bewirken.

FIG.1

FIG.2

FIG.3

FIG.4

EP 2 003 834 B1

3

$V_2$

8

FIG.5

$V_{DD}$

$V_1$

ibias

ibias ▶

4

9

5

## FIG.6

Database | Reader module

Control and modulation

Energy / data

Remote-powered tag

Application

V_CCA

gnd

Data

101

103

102

## FIG.7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5990733 A